# EUROPÄISCHE PATENTSCHRIFT

(11) **EP 1 689 559 B1**
(45) Veröffentlichungstag und Bekanntmachung des Hinweises auf die Patenterteilung: **11.04.2007**
(21) Anmeldenummer: 04819657.0
(22) Anmeldetag: 06.12.2004
(51) Int. Cl.: B23Q 7/00, B65G 47/00, B65G 17/00, B27C 5/06

(54) **VORRICHTUNG ZUR AUFNAHME VON PLATTENFÖRMIGEN WERKSTÜCKEN**
DEVICE FOR THE MOUNTING OF PLANAR WORKPIECES
DISPOSITIF DESTINE A RECEVOIR DES PIECES A USINER PLATES

(30) Priorität: 04.12.2003 DE 10356555
(43) Veröffentlichungstag der Anmeldung: 16.08.2006
(73) Patentinhaber: IMA Klessmann GmbH Holzbearbeitungssysteme, 32312 Lübbecke (DE)
(72) Erfinder: KEMPKENSTEFFEN, Heinz, 33397 Rietberg (DE); HUCKE, Helmut, 32312 Lübbecke (DE)
(74) Vertreter: Elbertzhagen, Otto
(86) Internationale Anmeldenummer: PCT/EP2004/013847
(87) Internationale Veröffentlichungsnummer: WO 2005/053899

(56) Entgegenhaltungen:
- DE-A1- 2 228 726
- DE-A1- 19 847 249
- US-A- 3 682 469
- US-A- 5 730 195
- US-A- 5 758 869

## Beschreibung

### TECHNISCHES GEBIET

Die Erfindung bezieht sich auf eine Vorrichtung zur Aufnahme von plattenförmigen Werkstücken, die die zu bearbeitenden Werkstücke flachliegend aufnimmt. Die Bearbeitung der Werkstücke erfolgt mittels Bearbeitungsaggregaten, die in einer X- und in einer Y-Achse verfahrbar sind. In Richtung der Y-Achse weist die Vorrichtung Tragbalken auf, auf denen Werkstückspanner angeordnet sind. Die Tragbalken sind an einer Führungsbahn in Richtung der X-Achse entlang den Bearbeitungsaggregaten positionierbar.

### STAND DER TECHNIK

Solche Vorrichtungen finden sich bei derartigen Holzbearbeitungsmaschinen im Einsatz, die als stationär bearbeitende Maschinen bezeichnet werden. Bei diesen Maschinen ist bei den Bearbeitungsvorgängen das Werkstück jeweils feststehend auf den Werkstückspannern angeordnet, die in geeigneter Weise positioniert werden, um nicht selbst mit den Bearbeitungswerkzeugen zu kollidieren. Dazu werden auch die die Werkzeugspanner aufnehmenden Tragbalken in Richtung der X-Achse der Maschine auf die passende Position gebracht.

Um die stationären Holzbearbeitungsmaschinen besser ausnutzen zu können, sieht man auf dem Maschinenbett nebeneinander in Richtung der X-Achse zwei oder mehrere Bearbeitungsplätze vor, an denen sich jeweils eine entsprechende Anzahl von Tragbalken mit darauf angeordneten Werkstückspannern befinden. Voraussetzung dafür ist, die Bearbeitungsaggregate an einem in X-Richtung der Maschine verfahrbaren Ständer anzuordnen, um die Bearbeitungs-vorgänge an den nebeneinanderliegenden Bearbeitungsplätzen vornehmen zu können.

Damit auch Werkstücke mit unterschiedlichen Formaten bearbeitet werden können, müssen bei jedem Formatwechsel die Saugspanner und ggf. die Tragbalken umgesetzt werden, wofür es bei mechanischer Verstellung sogenannte Rüsthilfen gibt, während bei der aufwendigeren, mechanischen Positionierung der Tragbalken und der Werkstückspanner deren jeweilige Position aus dem Bearbeitungsprogramm der Maschine abgerufen wird.

Je größer die Anzahl der Bearbeitungsvorgänge an den einzelnen Werkstücken wird und je mehr Bearbeitungsplätze vorgesehen werden, umso komplizierter wird eine Holzbearbeitungsmaschine der beschriebenen Art. Dies gilt vor allem dann, wenn die Bearbeitungsaggregate aufgrund ihrer sehr verschiedenen Funktionen, wie dem Fräsen, Bohren oder sonstigen spannehmenden Bearbeitungen einerseits und dem Kantenanleimen andererseits, an voneinander getrennten, verfahrbaren Führungen oder Ständern angeordnet sind, um nebeneinanderliegende Bearbeitungsplätze anfahren zu können. Außerdem ist bei den beschriebenen Holzbearbeitungsmaschinen der Werkstückfluß nicht optimal, denn die Werkstücke müssen in derjenigen Richtung auf die Bearbeitungsplätze aufgegeben werden, entgegen der sie von dort wieder entnommen werden.

Aus dem Dokument DE 101 62 862 A1 ist eine Vorrichtung zum Fixieren von plattenförmigen Werkstücken bekannt, welche die Merkmale des Oberbegriffs des Patentanspruchs 1 aufweist. Die Tragbalken und die Werkstückspanner der bekannten Vorrichtung sind nur deshalb über eine gemeinsame Antriebsvorrichtung verfahrbar und positionierbar, um das zu bearbeitende Werkstück so aufnehmen zu können, daß Kollisionen der Tragbalken und der Werkstückspanner mit den Bearbeitungswerkzeugen ausgeschlossen sind. Die Bearbeitung des jeweiligen Werkstücks erfolgt in einer feststehenden Aufspannung, deshalb dient das Verfahren der Tragbalken nicht zum Transport der Werkstücke.

Aus dem Dokument DE-A-2 228 726 ist eine Einrichtung zum kontinuierlichen Fördern und/oder Stapeln von plattenförmigem Fördergut bekannt, welche mit Vakuumsaugtellern bestückte Traversen aufweist, die in gleich großen Abständen voneinander mittels eines Antriebs entlang einer endlosen Führungsbahn umlaufend bewegt werden. Der Umlauf der Traversen mit den Vakuumsaugtellern findet in einer vertikalen Ebene statt, demgemäß sind beim Durchlaufen des unteren Abschnitts der endlosen Führungsbahn die Traversen mit den Vakuumtellern kopfstehend angeordnet. Ein Verfahren und Positionieren einerseits der Traversen und andererseits der Vakuumteller jeweils relativ zueinander ist bei dieser Vorrichtung nicht vorgesehen.

### DIE ERFINDUNG

Der Erfindung liegt die Aufgabe zugrunde, bei einer Vorrichtung der eingangs genannten Art, die eine stationäre Bearbeitung der auf den positionierten Werkstückspannern fixierten Werkstücke ermöglicht, auch einen Transport der Werkstücke in ihrer fixierten Lage vorzusehen, um mit ein und derselben Werkstück-Aufspannung nacheinander, nebeneinander oder hintereinander angeordnete Bearbeitungsplätze anfahren zu können.

Diese Aufgabe wird mit einer die Merkmale des Patentanspruchs 1 aufweisenden Vorrichtung gelöst.

Für die erfindungsgemäße Vorrichtung ist wesentlich, daß die auf den Werkstückspannern fixierten Werkstücke entlang dem Positionierabschnitt der Führungsbahn verfahren und angehalten, also an unterschiedlichen Bearbeitungsplätzen positioniert werden können, ohne die einmal für das betreffende Werkstück vorgegebene Spannposition relativ zu den Werkstückspannern und den sie aufnehmenden Tragbalken ändern zu müssen. So können die Werkstücke von Bearbeitungsplatz zu Bearbeitungsplatz weitergetaktet werden, wobei die Beärbeitungsplätze an einer einzigen Maschine oder aber auch an in der Transportrichtung der Vorrichtung hintereinander angeordneten Maschinen vorgesehen werden können. Dieser Vorgang spielt sich nur in einer Förderrichtung der Vorrichtung ab, weil die Transportbalken mit den Werkstückspannern über den Rückführungsabschnitt der Führungsbahn zu ihrer Anfangsposition zurückgefahren werden. Hierbei werden an der Aufgabestelle der Vorrichtung, an der die Werkstücke aufgenommen werden, die Tragbalken und die Werkstückspanner in eine solche Position gebracht, um das Werkstück in der jeweils passenden Lage zu spannen, damit an den einzelnen Bearbeitungsplätzen eine Kollision der Bearbeitungswerkzeuge mit den Werkstückspannern vermieden ist und eine sichere Fixierung der Werkstücke mit der entsprechenden Anzahl von Werkstückspannern erreicht wird. Für das Verfahren der Werkstückspanner relativ zu den Tragbalken und das Verfahren der Tragbalken an der Führungsbahn werden Hilfseinrichtungen vorgesehen, für deren Steuerung ein entsprechendes Programm erstellt wird, welches mit dem Bearbeitungsprogramm für die Bearbeitungsaggregate harmoniert.

Vorteilhafte Ausgestaltungsmerkmale der Erfindung ergeben sich aus den Unteransprüchen.

### KURZBESCHREIBUNG DER ZEICHNUNGSABBILDUNG

Die Erfindung wird nachfolgend anhand der Zeichnung an einem Ausführungsbeispiel noch näher erläutert. Dabei zeigen:
- Fig. 1: in schematischer Darstellung die Seitansicht einer Aufnahme- und Transport-Vorrichtung für plattenförmige Werkstücke,
- Fig. 2: die Draufsicht auf die Vorrichtung gemäß Fig. 1 und
- Fig. 3: die Stirnansicht der Vorrichtung nach den Figuren 1 und 2.

### BESTER WEG ZUR AUSFÜHRUNG DER ERFINDUNG

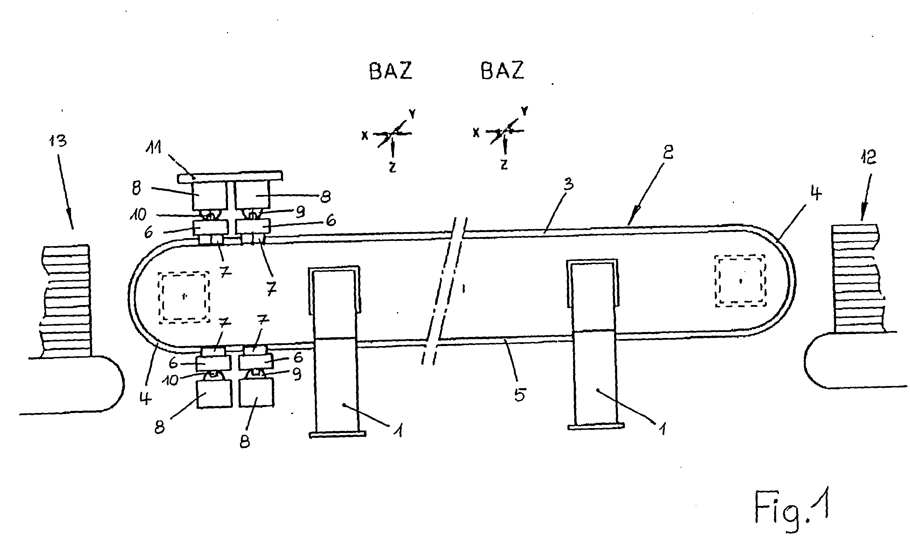

Im einzelnen zeigt Fig. 1 ein Gestell 1, auf dem eine Führungsbahn 2 angeordnet ist. Die Führungsbahn 2 gliedert sich in einen oberen Positionierabschnitt 3, der sich in in horizontaler Richtung erstreckt, und zwar in Richtung der üblichen X-Achse einer Holzbearbeitungsmaschine. Im vorliegenden Fall sind entlang dem Positionierabschnitt 3 der Führungsbahn 2 beispielhaft zwei solche Holzbearbeitungsmaschinen vorgesehen, die als Bearbeitungszentrum ausgeführt sind und dementsprechend mit der Abkürzung BAZ bezeichnet sind. Solche Bearbeitungszentren sind hinreichend bekannt und deshalb im einzelnen nicht dargestellt, lediglich ist hiervon das Achsensystem mit einer X-Achse sowie einer Y-Achse, welche eine horizontalliegende X-Y-Ebene aufspannen, und mit einer zu dieser Ebene senkrecht stehenden Z-Achse in Fig. 1 wiedergegeben. Die X-Richtung des Positionierabschnitts 3 der Führungsbahn 2 deckt sich mit der Richtung der X-Achsen der beiden Bearbeitungszentren BAZ.

An beiden Enden des Positionierabschnittes 3 der Führungsbahn 2 schließen Umlenkabschnitte 4 an, die in einem stetigen, halbkreisförmigen Bogen verlaufen. Beide Umlenkabschnitte 4 der Führungsbahn 2 gehen in einen Rückführungsabschnitt 5 über, der unterhalb des Positionierabschnittes 3 sich erstreckt. Insgesamt verläuft die Führungsbahn 2 in einer Vertikalebene, die dementsprechend zur X-Z-Ebene der Bearbeitungszentren BAZ parallel ist.

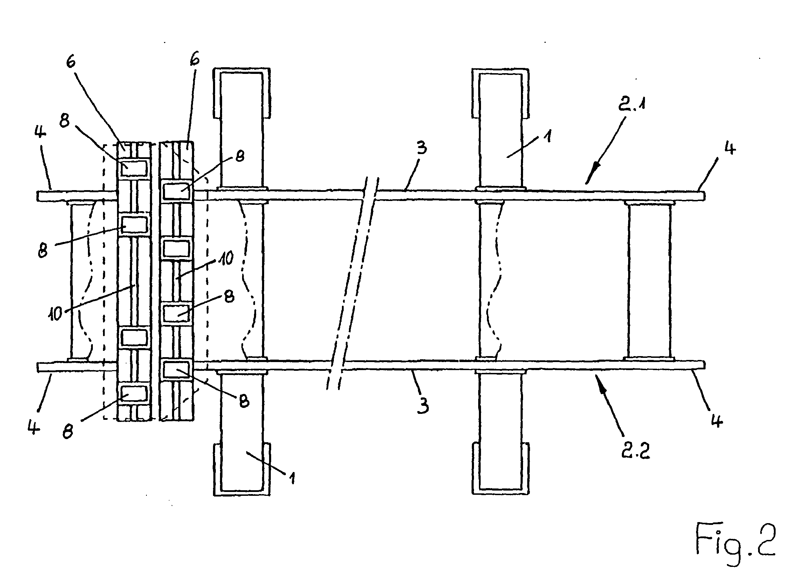

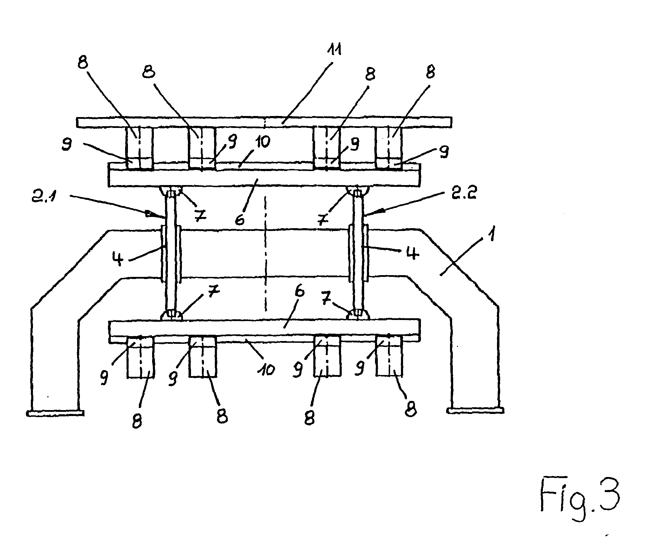

An der Führungsbahn 2 sind Tragbalken 6 verfahrbar gelagert, die entlang dem Positionierabschnitt 3 an dafür vorgegebenen Stellen angehalten werden. Die Tragbalken 6 sind mit Schlitten 7 versehen, die an der Führungsbahn 2 geführt werden. Dazu besteht die Führungsbahn 2 einem Schienensystem, welches entsprechend der ovalen Konfiguration der Führungsbahn 2 endlos ist. Wie aus den Figuren 2 und 3 ersichtlich ist, kann ein solches Schienensystem aus zwei beabstandeten, miteinander parallelen Führungsschienen 2.1 und 2.2 bestehen, die in der Y-Richtung miteinander deckungsgleich sind.

Die Tragbalken 6 erstrecken sich in einer zur X-Richtung senkrechten Richtung, der Y-Richtung, und in dieser Richtung sind auf den Tragbalken 6 Werkstückspanner 8 in Gestalt von Saugspannern positionierbar angeordnet. Unterseitig weisen die Werkstückspanner 8 Schlitten 9 auf, über die sie auf Schienen 10 gelagert sind, die sich oberseitig auf den Tragbalken 6 in deren Längsrichtung erstrecken. Sowohl die Tragbalken 6 als auch die Werkstückspanner 8 sind mit einer geeigneten Energieversorgung versehen, um daran vorhandene Antriebe zu speisen, die zu meinen für das Verfahren und Positionieren der Tragbalken 6 entlang der Führungsbahn 2 und zum anderen für das Verfahren und Positionieren der Werkstückspanner 8 entlang der Schienen 10 auf den Tragbalken 6 erforderlich sind. Für die Verfahr- und Positionierantriebe der Tragbalken 6 und der Werkstückspanner 8 kommen formschlüssige Systeme in Betracht, die beispielsweise mittels Zahnstange und Ritzel arbeiten, oder auch elektromagnetische Linearführungen, wozu die Tragbalken 6 oder die Werkstückspanner 8 mit Linearmotoren ausgestattet sind.

Die Steuerung der Tragbalken 6 in der X-Richtung und der Werkstückspanner 8 in der Y-Richtung erfolgt über ein Programm, welches mit dem Bearbeitungsprogramm der Bearbeitungszentren BAZ harmonisiert ist. Die Signalübertragung zu den entsprechenden Verfahr- und Positionierantrieben der Tragbalken 6 und der Werkstückspanner 8 kann über die elektrische Energieversorgung erfolgen, für die entlang der Führungsbahn 2 sich erstreckende Stromschienen vorgesehen werden können, von denen die elektrische Energie mittels Schleifkontakten oder berührungsfreien Kontakten abgenommen wird. In anderer Ausführung können die Steuersignale mittels Funk übertragen werden.

Vornehmlich kommen als Werkstückspanner 8 Saugspanner zum Einsatz, die mit einem entsprechenden Vakuum versorgt werden müssen. Dazu können die Werkstückspanner 8 entweder jeweils eine eigene Vakuumpumpe aufweisen, deren Antriebsmotor aus der elek-trischen Energieversorgung gespeist wird. Statt dessen können die einzelnen Werkstückspanner 8 je auch mit einem Vakuumspeicher ausgestattet sein, der an einer oder mehreren Stationen entlang der Führungsbahn 2 mit einer Vakuumquelle jeweils verbunden werden kann.

Die Werkstückspanner 8 nehmen an ihrer freiliegenden Stirnseite Werkstücke 11 auf, wobei je nach dem Umriß des betreffenden Werkstücks 11 zum einen die Werkstückspanner 8 auf den Tragbalken 6 und zum anderen die Tragbalken 6 so positioniert werden, daß das aufgenommene Werkstück so bearbeitet werden kann, daß Kollisionen zwischen den Bearbeitungswerkzeugen und der Aufnahme- und Spannvorrichtung ausgeschlossen sind. Ist jeweils eines der Werkstücke 11 in dieser Weise gespannt, bleibt die Zuordnung der Werkstückspanner und der Tragbalken 6 relativ zu diesem Werkstück während der gesamten Bearbeitungsvorgänge erhalten, unabhängig davon ob das Werkstück 11 über die Tragbalken 6 entlang der X-Richtung verfahren wird oder bei den jeweiligen Bearbeitungsvorgängen an einem der Bearbeitungszentren BAZ stillsteht. In Figur 1 ist angedeutet, daß das jeweilige Werkstück 11 am Anfang des Transportweges des Positionierabschnitts 3 der Führungsbahn 2 von einem Vorratsstapel 12 übernommen und am Ende dieses Transportweges zu einem Stapel 13 der bearbeiteten Werk-stücke überführt wird. So ist die Transportrichtung der Werkstückspanner 8 entlang dem Positionierabschnitt 3 der Führungsbahn 2 in den Figuren 1 und 2 von rechts nach links vorgegeben. Die Rückführung der Tragbalken 6 mit den Werkstückspannern 8 erfolgt über den ersten Umlenkabschnitt 4, den Rückführungsabschnitt 5 und den zweiten Umlenkabschnitt 4 der Führungsbahn 2, wobei die Transportbalken 6 beim Durchlaufen der Umlenkabschnitte 4 um 180 Grad gewendet werden. So sind die Transportbalken 6 und die Werkstückspanner 8 an den Transportbalken 6 auf dem Rückführungsweg entlang dem Rückführungsabschnitt 5 kopfstehend gehalten, um beim Durchlaufen des zweiten Umlenkabschnittes 4 an der Werkstückaufgabeseite wieder in ihre aufrechte Position zu gelangen. Sowohl in Figur 1 als auch in Figur 3 ist die kopfstehende Lage der Tragbalken 6 und der Werkstückspanner 8 dargestellt, wobei anzumerken ist, daß der Deutlichkeit halber lediglich nur einige der Tragbalken 6 und der Saugspanner 8 wiedergegeben sind, die sich in praktischer Ausführung in einer Mehr- oder Vielzahl im Umlauf entlang der Führungsbahn 2 befinden.

## Patentansprüche

1. Vorrichtung zur Aufnahme von plattenförmigen, flachliegend zu bearbeitenden Werkstücken (11) aus Holz oder Holzersatzstoffen, insbesondere von solchen für den Möbel- oder Innenausbau, mittels programmgesteuerter Bearbeitungsaggregate, deren Bearbeitungswerkzeuge zumindest in Richtung zweier Achsen, einer X-Achse und einer Y-Achse, verfahrbar sind, wobei in Richtung der Y-Achse sich erstreckende Tragbalken (6) vorhanden sind, auf denen in deren Längsrichtung positionierbare Werkstückspanner (8) in der Spannlage nach oben vorstehend angeordnet sind, wobei ferner eine Führungsbahn (2) vorhanden ist, an der die Tragbalken (6) in Richtung der X-Achse entlang den Bearbeitungsaggregaten verfahrbar gelagert sowie positionierbar sind, und wobei ein Verfahr- und Positionierantrieb für die Werkstückspanner (8) und Tragbalken (6) vorgesehen ist,
**dadurch gekennzeichnet,**
**daß** die Führungsbahn (2) für die Tragbalken (6) endlos ist und einen entlang der Bearbeitungsaggregate sich erstreckenden Positionierabschnitt (3) aufweist, an dessen beiden Enden von den Tragbalken (6) nacheinander durchfahrbare Umlenkabschnitte (4) anschließen, die in einen unterhalb des Positionierabschnittes (3) sich erstreckenden Rückführungsabschnitt (5) übergehen, entlang dem die Tragbalken (6) um 180° gewendet mit den Werkstückspannern (8) nach unten hin kopfstehend gehalten sowie verfahrbar sind, wobei die Tragbalken (6) jeweils eigene Verfahr- und Positionierantriebe haben, die derart gesteuert sind, daß die Zuordnung der Werkstückspanner (8) und der Tragbalken (6) relativ zum gespannten Werkstück (11) beim Verfahren in der X-Richtung sowie beim Stillstand erhalten bleibt.

2. Vorrichtung nach Anspruch 1,
**dadurch gekennzeichnet,**
**daß** die X-Achse und die Y-Achse eine horizontale X-Y-Ebene definieren, wobei die Abschnitte (3, 4, 5) der Führungsbahn (2) in einer dazu senkrechten Ebene liegen.

3. Vorrichtung nach Anspruch 1 oder 2,
**dadurch gekennzeichnet,**
**daß** die Tragbalken (6) und die Werkstückspanner (8) mit einer elektrischen Energiequelle mittels einer entlang der Führungsbahn (2) verlaufenden Stromschiene und damit zusammenwirkenden berührungslosen oder schleifenden Kontakten verbindbar sind.

4. Vorrichtung nach einem der Ansprüche 1 - 3,
**dadurch gekennzeichnet,**
**daß** die Positionierantriebe der Tragbalken (6) mittels eines Zahnrades oder -ritzels in Eingriff mit einer gezahnten Schiene stehen, die sich entlang der Führungsbahn (2) erstreckt.

5. Vorrichtung nach einem der Ansprüche 1 - 4,
**dadurch gekennzeichnet, daß** die Führungsbahn (2) als elektromagnetische Linearführung ausgebildet ist und die Tragbalken (6) mit damit zusammenwirkenden Linearmotoren ausgestattet sind.

6. Vorrichtung nach einem der Ansprüche 1 - 5,
**dadurch gekennzeichnet,**
**daß** die Werkstückspanner (8) mit einem Antriebssystem zum Verfahren und Positionieren entlang dem jeweiligen Tragbalken (6) ausgestattet sind, welches dem der Tragbalken (6) entspricht.

7. Vorrichtung nach einem der Ansprüche 1 - 4,
**dadurch gekennzeichnet,**
**daß** die Steuersignale zum Verfahren und Positionieren der Tragbalken (6) und der Werkstückspanner (8) über die entlang der Führungsbahn (2) verlaufende Stromschiene und die damit zusammenwirkenden Kontakte übertragen werden.

8. Vorrichtung nach einem der Ansprüche 1 - 7,
**dadurch gekennzeichnet,**
**daß** die Steuersignale zum Verfahren und Positionieren der Tragbalken (6) und der Werkstückspanner (8) per Funk übertragen werden.

9. Vorrichtung nach einem der Ansprüche 1 - 9,
**dadurch gekennzeichnet,**
**daß** die Werkstückspanner (8) Saugspanner sind.

10. Vorrichtung nach Anspruch 9,
**dadurch gekennzeichnet,**
**daß** die Werkstückspanner (8) je eine integrierte Vakuumpumpe aufweisen.

11. Vorrichtung nach Anspruch 9,
**dadurch gekennzeichnet,**
**daß** die Werkstückspanner (8) je mit einem Vakuumspeicher ausgestattet sind, der an einer oder mehreren Stationen entlang der Führungsbahn (2) mit einer Vakuumquelle verbindbar ist.

12. Vorrichtung nach einem der Ansprüche 1 - 11,
**dadurch gekennzeichnet,**
**daß** die Führungsbahn (2) aus zwei miteinander parallelen, voneinander beabstandeten Führungsschienen (2.1, 2.2) besteht, die in der Y-Richtung deckungsgleich sind und deren Abstand an eine Zweipunktauflagerung der Tragbalken (6) angepaßt ist.

13. Vorrichtung nach einem der Ansprüche 1 - 12,
**dadurch gekennzeichnet,**
**daß** die Bearbeitungsaggregate an voneinander separaten Maschinen angeordnet sind, an denen entlang sich der Positionierabschnitt (3) der Führungsbahn (2) erstreckt, wobei die jeweils einem der Werkstücke (9) zugeordneten Transportbalken (6) von Maschine zu Maschine getaktet werden.

## Claims

1. Device for the mounting of planar workpieces (11) of wood or wood substitutes which are to be machined whilst lying flat, more particularly those workpieces to be used for furniture or interior fittings, by means of program-controlled machining assemblies whose machining tools are able to move in the direction of at least two axes, an X-axis and a Y-axis, wherein support beams (6) are provided which extend in the direction of the Y-axis and support workpiece clamps (8) which can be positioned in the longitudinal direction of the beams and in the clamping position protrude upwards, wherein furthermore a guide track (2) is provided on which the support beams (6) are movable in the direction of the X-axis and can be positioned along the machining assemblies, and wherein a moving and positioning drive is provided for the workpiece clamps (8) and support beams (6)
**characterised in that**
the guide track (2) for the support beams (6) is endless and has a positioning section (3) which extends along the machining assemblies and is adjoined at both ends by deflection sections (4) over which the support beams (6) travel in succession and which change into a return section (5) extending underneath the positioning section (3) along which the support beams (6) turned by 180° are held and moved with the workpiece clamps (8) upside down towards the bottom wherein the support beams (6) each have their own moving and positioning drives which are controlled so that the relative association of the workpiece clamps (8) and support beams (6) in respect of the clamped workpiece (11) remains both during movement in the X-direction and in the stationary state.

2. Device according to claim 1,
**characterised in that**
the X-axis and the Y-axis define a horizontal X-Y plane wherein the sections (3, 4, 5) of the guide track (2) lie in a plane perpendicular thereto.

3. Device according to claim 1 or 2,
**characterised in that**
the support beam (6) and the workpiece clamp (8) can be connected to an electrical energy source by means of a current rail running along the guide track (2) and contactless or slipping contacts interacting therewith.

4. Device according to one of claims 1 to 3,
**characterised in that**
the positioning drives of the support beams (6) stand in engagement with a toothed rail extending along the guide track (2) by means of a toothed wheel or pinion.

5. Device according to one of claims 1 to 4,
**characterised in that**
the guide track (2) is designed as an electromagnetic linear guide and the support beams (6) are fitted with linear motors interacting therewith.

6. Device according to one of claims 1 to 5,
**characterised in that**
the workpiece clamps (8) are fitted with a drive system for moving and positioning along the relevant support beam (6) which corresponds to that of the support beam (6).

7. Device according to one of claims 1 to 4,
**characterised in that**
the control signals for moving and positioning the support beams (6) and the workpiece clamps (8) are transferred via the current rail running along the guide track (2) and the contacts interacting therewith.

8. Device according to one of claims 1 to 7,
**characterised in that**
the control signals for moving and positioning the support beams (6) and the workpiece clamps (8) are transferred by radio.

9. Device according to one of claims 1 to 9,
**characterised in that**
the workpiece clamps (8) are suction clamps.

10. Device according to claim 9,
**characterised in that**
the workpiece clamps (8) each have an integrated vacuum pump.

11. Device according to claim 9,
**characterised in that**
the workpiece clamps (8) are each fitted with a vacuum reservoir which can be connected at one or more stations along the guide track (2) to a vacuum source.

12. Device according to one of claims 1 to 11,
**characterised in that**
the guide track (2) consists of two guide rails (2.1, 2.2) which are parallel to and spaced from one another and which overlap in the Y-direction wherein their spacing is adapted to the two-point bearing of the support beams (6).

13. Device according to one of claims 1 to 12,
**characterised in that**
the machining assemblies are mounted on separate machines alongside which extends the positioning section (3) of the guide track (2) wherein the transport beams (6) assigned to each one of the workpieces (9) are synchronised from machine to machine.

## Revendications

1. Dispositif destiné à recevoir des pièces à usiner (11) en forme de plaques, posées à plat, en bois ou en matériaux de remplacement de bois, notamment pour la fabrication de meubles ou l'aménagement intérieur, au moyen d'installations d'usinage commandées par programme, dont les outils d'usinage peuvent être déplacés au moins dans la direction de deux axes, qui sont un axe X et un axe Y, dispositif dans lequel sont prévus des supports (6), s'étendant dans la direction de l'axe Y, sur lesquels sont agencés des organes de serrage(8) de pièces à usiner, positionnables dans leur direction longitudinale, qui font saillie vers le haut dans la position de serrage, ainsi qu'une voie de guidage (2) sur laquelle les supports (6) sont montées de manière mobile et positionnable dans la direction de l'axe X, le long des groupes d'usinage, et un mécanisme de positionnement étant prévu pour les organes de serrage (8) des pièces à usiner et les supports (6),
**caractérisé en ce que**
la voie de guidage (2) pour les supports (6) est sans fin et présente une section de positionnement (3), s'étendant le long des groupes d'usinage, aux deux extrémités de laquelle se raccordent des sections de renvoi (4) qui peuvent être parcourues successivement par les supports (6) et qui se raccordent à une section de retour (5) s'étendant au-dessous de la section de positionnement (3), le long de laquelle les supports (6), tournés de 180°, peuvent être conduits avec les organes de serrage (8) de pièces à usiner maintenus tête en bas, les supports (6) possédant chacun leurs propres mécanismes de déplacement et de positionnement qui sont commandés de sorte que l'association des organes de serrage (8) de pièces à usiner et des supports (6) aux pièces à usiner (11) soit conservée aussi bien pendant le déplacement dans la direction X qu' à l'arrêt.

2. Dispositif selon la revendication 1,
**caractérisé en ce que**
l'axe X et l'axe Y définissent des plans X-Y, les sections (3, 4, 5) de la voie de guidage (2) étant situées dans un plan perpendiculaire à ceux-ci.

3. Dispositif selon la revendication 1,
**caractérisé en ce que**
les supports (6) et les organes de serrage (8) de pièces à usiner peuvent être raccordés à une source d'énergie électrique au moyen d'un rail conducteur s'étendant le long de la voie de guidage (2), et à des contacts sans contact ou glissants qui coopèrent avec celle-ci.

4. Dispositif selon l'une des revendications 1 à 3,
**caractérisé en ce que**
les mécanismes de positionnement des supports (6) entrent en prise, au moyen d'une roue dentée ou d'un pignon, avec un rail denté qui s'étend le long de la voie de guidage (2).

5. Dispositif selon l'une des revendications 1 à 4,
**caractérisé en ce que**
la voie de guidage (2) est conçue en tant que guidage linéaire, électromagnétique, et que les supports (6) sont équipés de moteurs linéaires qui coopèrent avec celle-ci.

6. Dispositif selon l'une des revendications 1 à 5,
**caractérisé en ce que**
les organes de serrage (8) sont équipés avec un système d'entraînement pour le déplacement et le positionnement le long du support (6) respectif qui correspond audit support (6).

7. Dispositif selon l'une des revendications 1 à 4,
**caractérisé en ce que**
les signaux de commande pour le déplacement et le positionnement des supports(6) et des organes de serrage (8) sont transmis par l'intermédiaire du rail électrique, s'étendant le long de la voie de guidage (2), et le contact coopérant avec celle-ci.

8. Dispositif selon l'une des revendications 1 à 7,
**caractérisé en ce que**
les signaux de commande pour le déplacement et le positionnement des supports (6) et des organes de serrage (8) sont transmis par radio.

9. Dispositif selon l'une des revendications 1 à 8,
**caractérisé en ce que** les organes de serrage (8) sont des organes de serrage aspirateurs à aspiration.

10. Dispositif selon la revendication 9,
**caractérisé en ce que**
les organes de serrage (8) présentent chacun une pompe à vide intégrée.

11. Dispositif selon la revendication 1,
**caractérisé en ce que**
les organes de serrage (8) sont équipés chacun d'un accumulateur à vide qui, à un ou plusieurs postes, le long de la voie de guidage (2), peut être relié à une source de vide.

12. Dispositif selon l'une des revendications 1 à 3,
**caractérisé en ce que**
la voie de guidage (2) consiste en deux rails de guidage (2.1, 2.2), disposés parallèlement, à distance l'un de l'autre, qui coïncident dans la direction Y, et dont l'intervalle est adapté à un support à deux points d'appui des supports (6).

13. Dispositif selon l'une des revendications 1 à 3,
**caractérisé en ce que**
les groupes d'usinage sont agencés sur des machines séparées les unes des autres, le long desquelles s'étend la section de positionnement (3) de la voie de guidage (2), les supports (6), associés chacun à une pièce à usiner (9), étant cadencés d'une machine à l'autre.
